# EUROPEAN PATENT APPLICATION

(11) **EP 4 349 707 A1**
(43) Date of publication of application: **10.04.2024**
(21) Application number: 22810911.2
(22) Date of filing: 08.03.2022
(51) Int. Cl.: B63B 79/10, B63B 49/00, B63B 79/40, B63H 25/02, B63H 25/04, G01S 17/88, G08G 3/02

(54) **VESSEL NAVIGATION ASSISTANCE DEVICE, VESSEL NAVIGATION ASSISTANCE METHOD, AND VESSEL NAVIGATION ASSISTANCE PROGRAM**

(30) Priority: 25.05.2021 JP 2021087630
(71) Applicant: Furuno Electric Co., Ltd., Nishinomiya-City, Hyogo 662-8580 (JP)
(72) Inventor: SONOBE, Tatsuya, Nishinomiya-City, Hyogo 6628580 (JP); TSUJIMOTO, Kazuki, Nishinomiya-City, Hyogo 6628580 (JP)
(74) Representative: Müller Hoffmann & Partner
(86) International application number: PCT/JP2022/009934
(87) International publication number: WO 2022/249630

(57) **Abstract**

The present disclosure provides measurement of a distance between a ship and an object with more sufficient accuracy. A navigation support device 10 includes a distance measuring part 21, a posture measuring part 22, a ship-side reference point setting part 30, and a horizontal distance calculating part 40. The distance measuring part 21 measures a distance of a quay that is a target at which a ship docks, on the basis of a ranging coordinate system, and outputs ranging information on the quay on the basis of the ranging coordinate system. The posture measuring part 22 measures a posture of the ship. The ship-side reference point setting part 30 sets a given position of the ship as a ship-side reference point on the basis of the ranging coordinate system. The horizontal distance calculating part 40 calculates a horizontal distance between the ship-side reference point and the quay based on the ranging information on the quay and the ship-side reference point that are projected to a horizontal plane, by using the posture.

## Description

### TECHNICAL FIELD

The present disclosure relates to a navigation support technique, for example, used when anchoring a ship.

### BACKGROUND ART

Berthing support devices which measure a distance between a ship and an object, such as a quay, using a distance sensor are known.

### [Reference Document(s) of Conventional Art]

### [Patent Document]

[Patent Document 1] JP5000244B2

### DESCRIPTION OF THE DISCLOSURE

### [Problem(s) to be Solved by the Disclosure]

However, according to the conventional berthing support device, the distance between the ship and the object may not be measured with sufficient accuracy.

Therefore, one purpose of the present disclosure is to measure a distance between a ship and an object with more sufficient accuracy.

### [Summary of the Disclosure]

A navigation support device according to the present disclosure includes a distance measuring part, a posture measuring part, a ship-side reference point setting part, and a horizontal distance calculating part. The distance measuring part measures a distance of a quay that is a target at which a ship docks, on the basis of a ranging coordinate system, and outputs ranging information on the quay on the basis of the ranging coordinate system. The posture measuring part measures a posture of the ship. The ship-side reference point setting part sets a given position of the ship as a ship-side reference point on the basis of the ranging coordinate system. The horizontal distance calculating part calculates a horizontal distance between the ship and the quay based on the ranging information on the quay and the ship-side reference point that are projected to a horizontal plane, by using the posture.

According to this configuration, even if shaking occurs to the ship, both the position of the quay and the position of the ship-side reference point are corrected based on the posture according to the shaking. Thus, the error of the horizontal distance due to shaking is suppressed. In particular, if a position in the height direction is different between a distance sensor or an attitude sensor and an object, the error of the horizontal distance increases due to an installation error of the distance sensor or the attitude sensor and a measurement error of a posture angle. However, this configuration suppresses the error in the horizontal distance.

Further, according to the navigation support device of the present disclosure, the horizontal distance calculating part may include a projecting part, a quay line extracting part, and a distance calculating part. The projecting part projects the ranging information on the quay and the ship-side reference point to the horizontal plane by using the posture. The quay line extracting part extracts a quay line for calculation of the horizontal distance based on the ranging information on the quay projected to the horizontal plane. The distance calculating part calculates the horizontal distance based on the quay line and the ship-side reference point.

Further, according to the navigation support device of the present disclosure, the posture may include a rolling component.

Further, according to the navigation support device of the present disclosure, the posture may include a yawing component.

Further, according to the navigation support device of the present disclosure, the ship-side reference point setting part may set a plurality of the ship-side reference points. The horizontal distance calculating part may calculate the horizontal distance at an arbitrary measurement reference point on a straight line passing through the plurality of ship-side reference points based on the horizontal distances of the plurality of ship-side reference points.

Further, the navigation support device of the present disclosure may include a draft measuring part which measures a draft of the ship. The ship-side reference point setting part may set a position of the ship-side reference point in a height direction of the ship based on the draft.

### [Effect of the Disclosure]

According to the present disclosure, it is possible to measure the distance between the ship and the object with more sufficient accuracy.

### BRIEF DESCRIPTION OF DRAWINGS

Fig. 1 is a functional block diagram illustrating a configuration of a navigation support device according to a first embodiment of the present disclosure.
Figs. 2(A) and 2(B) are side views illustrating a spatial relationship between a ship, a distance measuring part, a quay, and a ship-side reference point.
Figs. 3(A) and 3(B) are views illustrating one example of a spatial relationship between the ship-side reference point and a quay line after projection to a horizontal plane.
Fig. 4 is a graph illustrating one example of a change in a horizontal distance between a case where shaking occurs and a case where shaking does not occur.
Fig. 5 is a flowchart illustrating one example of a navigation support method according to the first embodiment of the present disclosure.
Fig. 6 is a flowchart illustrating one example where a calculation of the horizontal distance illustrated in Fig. 5 is implemented.
Figs. 7(A) and 7(B) are plan views illustrating a spatial relationship between a ship, a distance measuring part, a quay, and a ship-side reference point.
Fig. 8 is a functional block diagram illustrating a configuration of a navigation support device according to a third embodiment of the present disclosure.
Fig. 9 is a plan view illustrating a spatial relationship between a ship, a distance measuring part, a quay, and a ship-side reference point.
Fig. 10 is a flowchart illustrating one example of a navigation support method according to the third embodiment of the present disclosure.
Fig. 11 is a functional block diagram illustrating a configuration of a navigation support device according to a fourth embodiment of the present disclosure.
Fig. 12 is a flowchart illustrating one example of a navigation support method according to the fourth embodiment of the present disclosure.

### MODES FOR CARRYING OUT THE DISCLOSURE

### [First Embodiment]

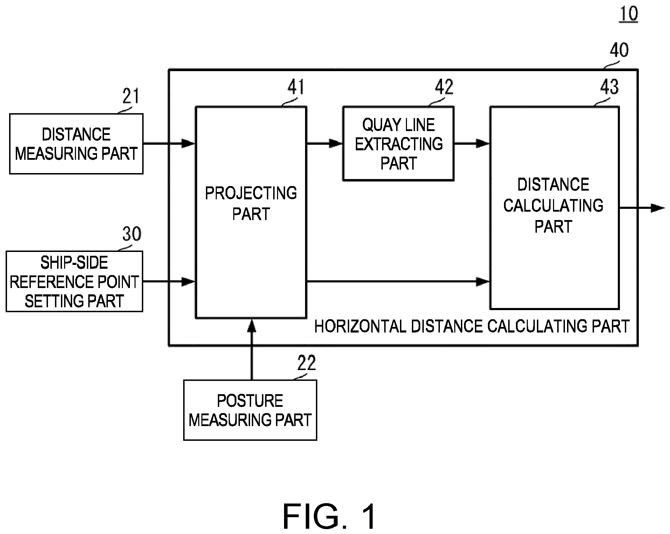

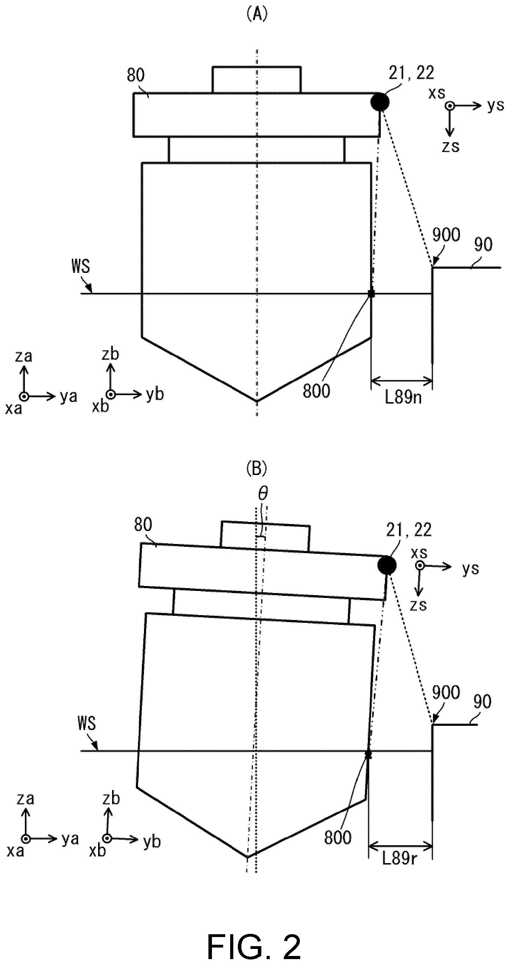

A navigation support technique according to one embodiment of the present disclosure is described with reference to the drawings. Fig. 1 is a functional block diagram illustrating a configuration of a navigation support device according to a first embodiment of the present disclosure. Figs. 2(A) and 2(B) are side views illustrating a spatial relationship between a ship, a distance measuring part, a quay, and a ship-side reference point. Fig. 2(A) illustrates a state where shaking in the rolling direction (rolling) does not occur, and, Fig. 2(B) illustrates a state where shaking in the rolling direction occurs (an attitude angle in the rolling direction θ = 0°).

As illustrated in Fig. 1, a navigation support device 10 includes a distance measuring part 21, a posture measuring part 22, a ship-side reference point setting part 30, and a horizontal distance calculating part 40.

Therefore, for example, the navigation support device 10 is realizable, except for the optical system and the radio wave system, by a navigation support program which realizes a navigation support method, a memory device which stores the navigation support program, and a processor, such as a CPU, which executes the navigation support program. Further, the memory device and the processor may also be realized by an IC in which the navigation support program is incorporated.

The distance measuring part 21 is a distance measuring or ranging device, such as a LiDAR. The distance measuring part 21 transmits a detection wave within a three-dimensional detection area, and generates ranging information from a reception signal thereof. In more detail, the distance measuring part 21 detects a signal level of a reflection wave, and extracts a point (position), at which a reflection wave above a given signal level is obtained, as a characteristic point. The distance measuring part 21 uses position coordinates of the characteristic point expressed by a three-dimensional ranging coordinate system as ranging information. The position coordinates of the characteristic point can be calculated based on an incoming direction of the reflection wave of the detection wave, and a half of a time difference between a transmission timing of the detection wave and a reception timing of the reflection wave.

In the example of Figs. 2(A) and 2(B), the distance measuring part 21 is installed near an upper end of a ship 80 on the port side. The distance measuring part 21 has xs coordinate axis, ys coordinate axis, and zs coordinate axis of the three-dimensional ranging coordinate system. The distance measuring part 21 is installed in a given posture with respect to the ship 80.

In more detail, a three-dimensional ship body coordinate system is set as the ship 80, and it has xb coordinate axis, yb coordinate axis, and zb coordinate axis. The xb coordinate axis is parallel to the bow-and-stem direction of the ship 80, the bow direction is set as positive (+) direction, and the stem direction is set as negative (-) direction. The yb coordinate axis is parallel to the width direction (the starboard-and-port direction) of the ship 80, the port direction is set as + direction, and the starboard direction is set as - direction. The zb coordinate axis is parallel to the height direction of the ship 80, upward is set as + direction, and downward is set as - direction. Note that this setup is one example and it is not limited to this configuration.

The distance measuring part 21 is installed so that the xs coordinate axis is parallel to the xb coordinate axis, and their + directions are in agreement with each other. The distance measuring part 21 is installed so that the ys coordinate axis is parallel to the yb coordinate axis, and their + directions are in agreement with each other. The distance measuring part 21 is installed so that the zs coordinate axis is parallel to the zb coordinate axis, and their + directions are opposite from each other.

Note that this spatial relationship between the ranging coordinate system and the ship body coordinate system is also one example, and it is not limited to this configuration, as long as the angle differences (formed angle) of coordinate axes of each coordinate system are defined and recognized uniquely.

By such an installation to the ship 80, the distance measuring part 21 can extract the characteristic point in the three-dimensional area in the bow-and-stem direction (the direction parallel to the xb coordinate axis), the starboard-and-port direction (the direction parallel to the yb coordinate axis), and the height direction of the ship 80 (the direction parallel to the zb coordinate axis), on the port side of the ship 80. Further, the distance measuring part 21 acquires position coordinates in the ranging coordinate system of the characteristic point, and generates the ranging information. The distance measuring part 21 outputs the ranging information to the horizontal distance calculating part 40.

The posture measuring part 22 is realized, for example, by an attitude sensor provided to the ship 80. Note that the attitude sensor may use a positioning technique of GNSS signals, or may use an inertia sensor. Further, the attitude sensor may combine the positioning technique of the GNSS signals and the inertia sensor. If the positioning technique of the GNSS signals is used, the position (position coordinates) of the ship can also be measured. Further, if the positioning technique of the GNSS signals is used, the attitude angle can be measured with high precision under an open sky environment like on the ocean.

The posture measuring part 22 is installed at substantially the same position as the distance measuring part 21 with respect to the ship 80. The posture measuring part 22 is preferred to be installed so that the coordinate system of the attitude angle to be measured becomes in agreement with the ranging coordinate system. However, similar effects can be acquired by acquiring the angle difference between the coordinate system of the posture measuring part 22 and the ranging coordinate system beforehand, and performing correction using this angle difference.

The posture measuring part 22 measures the attitude angle of the ship 80. The attitude angle measured by the posture measuring part 22 can be expressed by an angle variation in each coordinate axis of the ship body coordinate system and the ranging coordinate system with respect to the absolute coordinate system, when the state changes to the state where the ship 80 is shaking from the state where the ship 80 is not shaking.

The absolute coordinate system in this embodiment is the coordinate system defined with perpendicularly-crossed coordinate axes which do not change with movement and displacement of the ship 80, and the position coordinates of the absolute coordinate system of a quay 90 which is not influenced by the movement and the displacement of the ship 80 do not change. For example, in the case of Fig. 2(A), it is set by the xa coordinate axis and the ya coordinate axis which are perpendicularly-crossed two axes parallel to a water surface WS (more precisely, the water surface WS in a still water state where wave is not produced), and the za coordinate axis perpendicular to the water surface WS. Note that, although in Figs. 2(A) and 2(B) the direction parallel to a quay line 900 is the xa coordinate axis and the direction perpendicular to the quay line 900 is the ya coordinate axis in order to simplify the explanation, it is not limited to this configuration.

The posture measuring part 22 measures the attitude angle θ in the rolling direction of the ship 80, the attitude angle in the pitching direction of the ship 80, and the attitude angle in the yawing direction of the ship 80. Note that, in this embodiment, the posture measuring part 22 is not limited as long as it can measure at least the attitude angle θ in the rolling direction of the ship 80. The posture measuring part 22 outputs the measured attitude angle(s) to the horizontal distance calculating part 40.

The ship-side reference point setting part 30 sets a ship-side reference point 800. The ship-side reference point 800 is a reference point which is set to the ship 80 in order to calculate a horizontal distance described later.

The ship-side reference point setting part 30 sets the ship-side reference point 800, for example, at a position of a given height on the port side surface of the ship 80, as illustrated in Figs. 2(A) and 2(B). The position of the ship-side reference point 800 is set, for example, at a position of the substantially same height as the water surface WS during normal operation of the ship 80.

Further, the position coordinates of the ship-side reference point 800 are set as follows, for example. A reflector etc. is installed beforehand at a location which will be at the water surface WS. The distance measuring part 21 detects this reflector, and calculates the position coordinates in the ranging coordinate system. The ship-side reference point setting part 30 sets the position coordinates as position coordinates of the ship-side reference point 800.

The ship-side reference point setting part 30 outputs the position coordinates of the ship-side reference point 800 to the horizontal distance calculating part 40.

The horizontal distance calculating part 40 includes a projecting part 41, a quay line extracting part 42, and a distance calculating part 43.

The position coordinates (the ranging information) of each characteristic point obtained on the basis of the ranging coordinate system, the position coordinates of the ship-side reference point 800 set on the basis of the ranging coordinate system, and the attitude angle measured by the posture measuring part 22 are inputted into the projecting part 41. The projecting part 41 projects the position coordinates of each characteristic point and the position coordinates of the ship-side reference point 800 to a horizontal plane using the attitude angle. That is, the projecting part 41 calculates the position coordinates of each characteristic point (projected position coordinates of each characteristic point) and the position coordinates of the ship-side reference point 800 (projected position coordinates of the ship-side reference point 800) which are defined on the basis of the absolute coordinate system and are projected to the horizontal plane.

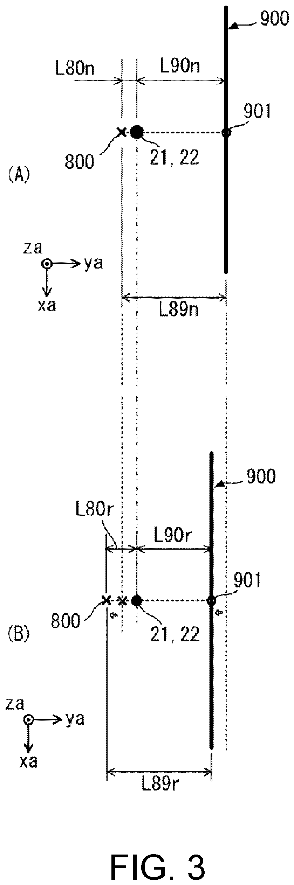

For example, the projecting part 41 calculates the projected position coordinates of each characteristic point and the projected position coordinates of the ship-side reference point 800 using the attitude angle θ in the rolling direction. Figs. 3(A) and 3(B) are views illustrating one example of the spatial relationship between the ship-side reference point and the quay line after the projection to the horizontal plane. Fig. 3(A) illustrates a state where shaking in the rolling direction does not occur similarly to Fig. 2(A), and Fig. 3(B) illustrates a state where shaking in the rolling direction occurs (the attitude angle θ in the rolling direction) similarly to Fig. 2(B).

The projecting part 41 outputs the projected position coordinates of each characteristic point to the quay line extracting part 42. Further, the projecting part 41 outputs the projected position coordinates of the ship-side reference point 800 to the distance calculating part 43.

The quay line extracting part 42 extracts the quay line 900 from the projected position coordinates of a plurality of characteristic points. For example, the quay line extracting part 42 detects a plurality of characteristic points, which are lined up on a substantially straight line, from the projected position coordinates of the plurality of characteristic points. The quay line extracting part 42 calculates a line segment which connects the plurality of characteristic points lined up on the substantially straight line as a vector quantity. The quay line extracting part 42 extracts the line segment expressed by the vector quantity as the quay line 900.

Note that, when a plurality of straight lines are detected, the quay line extracting part 42 calculates the line segment expressed by the vector quantity for every straight line. The quay line extracting part 42 uses a statistical procedure (for example, a maximum likelihood method) etc. for the plurality of line segments to extract one quay line 900 which is comprised of the line segment expressed by the vector quantity.

The quay line extracting part 42 outputs the quay line 900 of the vector quantity to the distance calculating part 43.

The distance calculating part 43 calculates a horizontal distance L89 by using the quay line 900 of the vector quantity, and the projected position coordinates of the ship-side reference point 800. For example, the distance calculating part 43 calculates the horizontal distance L89 by using a formula for a distance between the vector (straight line) and the point. If this is illustrated conceptionally, as illustrated in Figs. 3(A) and 3(B), the distance calculating part 43 uses the foot of a perpendicular line from the ship-side reference point 800 to the quay line 900 as a quay reference point 901, and calculates the horizontal distance L89 which is the distance between the ship-side reference point 800 and the quay reference point 901.

When shaking in the rolling direction does not occur, as illustrated in Fig. 3(A), a horizontal distance L89n becomes a value obtained by adding a distance L90n between the distance measuring part 21 and the quay reference point 901 (the quay line 900) which are projected to the horizontal plane, to a distance L80n between the distance measuring part 21 and the ship-side reference point 800 which are projected to the horizontal plane.

When shaking in the rolling direction occurs, as illustrated in Fig. 3(B), a horizontal distance L89r becomes a value obtained by adding a distance L90r between the distance measuring part 21 and the quay reference point 901 (the quay line 900) which are projected to the horizontal plane, to a distance L80r between the distance measuring part 21 and the ship-side reference point 800 which are projected to the horizontal plane.

Here, the quay line 900 (the quay reference point 901) is not influenced by the shaking of the ship 80 in the absolute coordinate system, and thereby, the position coordinates do not change. However, since the relationship between the absolute coordinate system and the ranging coordinate system changes due to the shaking of the ship 80, the position coordinates (the ranging information) of the quay line 900 (the quay reference point 901) in the ranging coordinate system changes according to a magnitude of the shaking. Therefore, the distance L90n between the quay line 900 (the quay reference point 901) and the distance measuring part 21 in the horizontal plane when shaking does not occur, and the distance L90r between the quay line 900 (the quay reference point 901) and the distance measuring part 21 in the horizontal plane when shaking occurs changes according to the magnitude of shaking.

Thus, if the position coordinates of the ship-side reference point 800 are defined, for example, on the basis of the absolute coordinate system, and are set so as not to be influenced by the shaking of the ship 80, the horizontal distance when shaking does not occur and the horizontal distance when shaking occurs differ from each other according to the magnitude of shaking. That is, the horizontal distance includes error due to shaking.

However, in the navigation support device 10 of the present disclosure, the ship-side reference point 800 is set on the basis of the ranging coordinate system. In this case, even if shaking occurs, the position coordinates of the ship-side reference point 800 on the basis of the ranging coordinate system do not change according to the magnitude of shaking. That is, the position coordinates of the ship-side reference point 800 on the basis of the ranging coordinate system do not change regardless of the existence of shaking. On the other hand, when shaking occurs, the relationship between the absolute coordinate system and the ranging coordinate system changes.

Therefore, the distance L80n between the quay line 900 (the quay reference point 901) and the distance measuring part 21 in the horizontal plane when shaking does not occur, and the distance L80r between the ship-side reference point 800 and the distance measuring part 21 in the horizontal plane when shaking occurs change according to the magnitude of shaking. Further, in the horizontal plane, a direction of the change in the quay line 900 (the quay reference point 901) with respect to the distance measuring part 21 becomes the same as a direction of the change in the ship-side reference point 800 with respect to the distance measuring part 21. In other words, in the horizontal plane, the quay line 900 (the quay reference point 901) and the ship-side reference point 800 change in the same direction.

This acts so that the change in the distance between the quay line 900 (the quay reference point 901) and the distance measuring part 21 and the change in the distance between the ship-side reference point 800 and the distance measuring part 21 cancel out each other.

Therefore, as illustrated in Figs. 3(A) and 3(B), the error of the horizontal distance L89n when shaking does not occur and the horizontal distance L89r when shaking occurs is suppressed.

As a result, the navigation support device 10 can suppress the influence of the shaking of the ship 80 to measure the horizontal distance between the ship 80 and the quay line 900 with more sufficient accuracy.

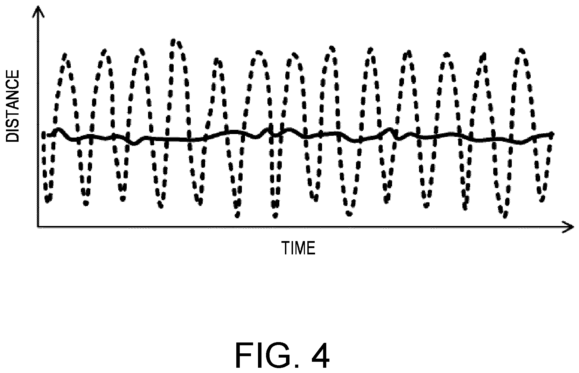

Fig. 4 is a graph illustrating one example of the change in the horizontal distance between the case where shaking occurs and the case where shaking does not occur. Fig. 4 is a graph which is created by simulating the shaking. In Fig. 4, a solid line illustrates a case where the configuration and the processing of the present disclosure are used, and a broken line illustrates a case where the configuration and the processing of the present disclosure are not adopted (for example, when the horizontal distance between the distance measuring part 21 and the quay line 900 (the quay reference point 901) is used as it is).

As illustrated in Fig. 4, by adopting the configuration and the processing of the present disclosure, the navigation support device 10 can measure the horizontal distance between the ship 80 and the quay line 900 with more sufficient accuracy.

Particularly, as illustrated in Figs. 2(A) and 2(B), when the distance between the distance measuring part 21 and the water surface WS is large, although the influence of the error due to shaking in the rolling direction is large, the horizontal distance between the ship 80 and the quay line 900 can be measured with more sufficient accuracy by adopting the configuration and the processing of the navigation support device 10.

### (Navigation Support Method (Horizontal Distance Calculating Method))

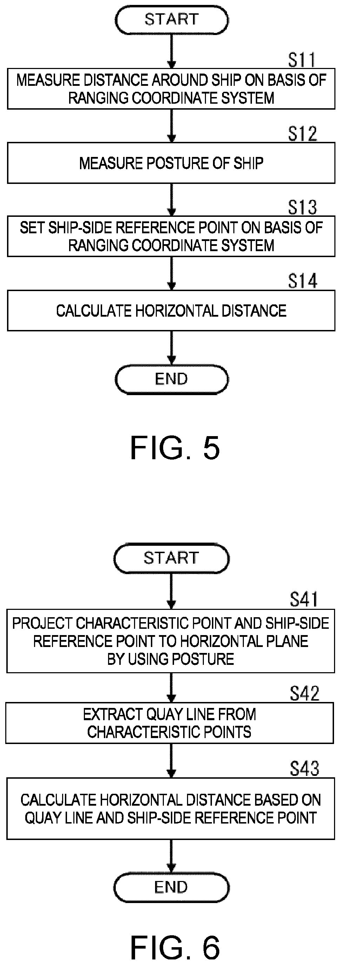

Fig. 5 is a flowchart illustrating one example of a navigation support method according to a first embodiment of the present disclosure. Fig. 6 is a flowchart illustrating one example where a calculation of the horizontal distance illustrated in Fig. 5 is implemented. Note that, since the details of each processing illustrated in Figs. 5 and 6 are explained as the navigation support device 10 described above, explanation is omitted below unless there is necessity for additional explanation.

As illustrated in Fig. 5, the distance measuring part 21 of the navigation support device 10 measures a distance around the ship 80 (in the case of Figs. 2(A) and 2(B), on the port side of the ship 80) on the basis of the ranging coordinate system (S11). The posture measuring part 22 of the navigation support device 10 measures the posture of the ship 80 (S 12).

The ship-side reference point setting part 30 of the navigation support device 10 sets the ship-side reference point 800 on the basis of the ranging coordinate system. The horizontal distance calculating part 40 of the navigation support device 10 calculates the horizontal distance between the ship 80 and the quay 90 (the quay line 900) based on the posture, the quay line according to the ranging information acquired by the ranging, and the ship-side reference point (S14).

In the calculation of the horizontal distance, as illustrated in Fig. 6, the projecting part 41 of the horizontal distance calculating part 40 projects the characteristic point included in the ranging information, and the ship-side reference point to the horizontal plane by using the posture (S41).

The quay line extracting part 42 extracts the quay line 900 from a plurality of characteristic points projected to the horizontal plane (S42).

The distance calculating part 43 calculates the horizontal distance based on the quay line 900 (vector quantity) and the position coordinates of the ship-side reference point 800 in the horizontal plane (S43).

According to this processing, the horizontal distance between the ship 80 and the quay line 900 can be measured with more sufficient accuracy, while suppressing the influence of shaking.

### [Second Embodiment]

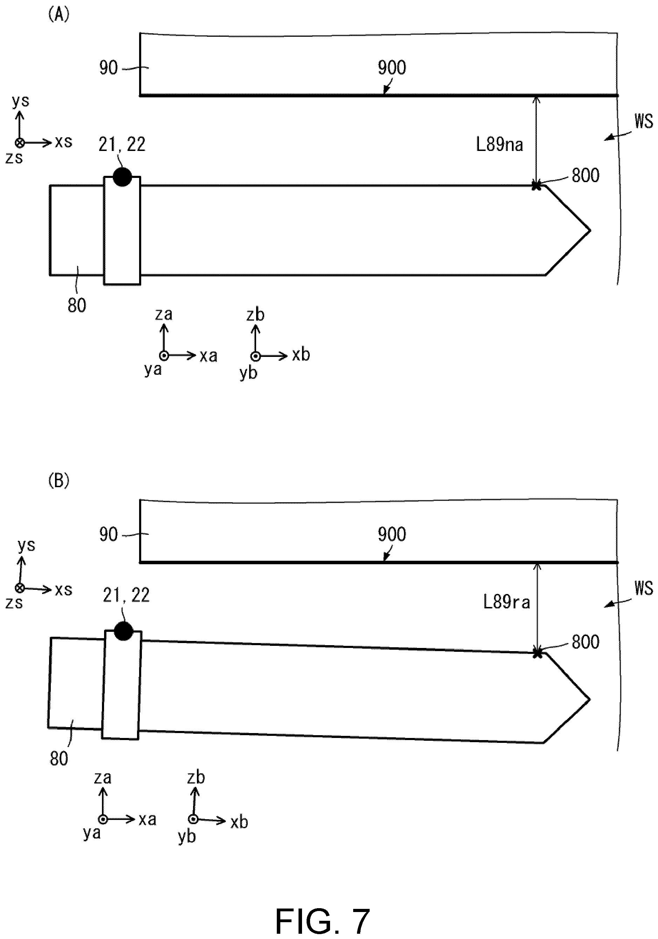

A navigation support technique according to a second embodiment of the present disclosure is described with reference to the drawings. Figs. 7(A) and 7(B) are plan views illustrating a spatial relationship between the ship, the distance measuring part, the quay, and the ship-side reference point. Fig. 7(A) illustrates a state where shaking in the yawing direction at the stem does not occur, and Fig. 7(B) illustrates a state where shaking in the yawing direction at the stem occurs (the attitude-angle in the yawing direction # 0°).

A navigation support device according to the second embodiment is the same in the configuration in terms of the functional blocks as the navigation support device 10 according to the first embodiment, but differs in that it suppresses the influence of shaking in the rolling direction and shaking in the yawing direction.

In the navigation support device according to the second embodiment, the distance measuring part 21 and the posture measuring part 22 are installed near the stem of the ship 80. The ship-side reference point setting part 30 sets the ship-side reference point 800 near the water surface WS near the bow.

In the navigation support device according to the second embodiment, the posture measuring part 22 measures at least the attitude angle in the yawing direction of the ship 80.

In this case, similarly to the first embodiment, when the stem of the ship 80 is shaken in the yawing direction, the quay line 900 and the ship-side reference point 800 move in the same direction in the horizontal plane. Therefore, for example, a horizontal distance L89na illustrated in Fig. 7(A) when shaking in the yawing direction does not occur and a horizontal distance L89ra illustrated in Fig. 7(B) when shaking in the yawing direction occurs become substantially the same. Therefore, similarly to the navigation support device of the first embodiment, the navigation support device according to the second embodiment can suppress the influence of shaking, and can measure the horizontal distance between the bow of the ship 80 and the quay line 900 with more sufficient accuracy.

Particularly, as illustrated in Figs. 7(A) and 7(B), although the influence of the error due to shaking in the yawing direction becomes larger as the length of the ship 80 becomes longer (in other words, as the distance between the distance measuring part 21 and the ship-side reference point in the bow-and-stem direction becomes longer), by adopting the configuration and the processing of the navigation support device described above, the horizontal distance between the ship 80 and the quay line 900 can be measured with more sufficient accuracy.

Note that, by taking the shaking in the rolling direction into consideration similarly to the first embodiment, the navigation support device according to the second embodiment can suppress the influences of shaking in the rolling direction and shaking in the yawing direction, and can measure the horizontal distance between the bow of the ship 80 and the quay line 900 with still more sufficient accuracy.

### [Third Embodiment]

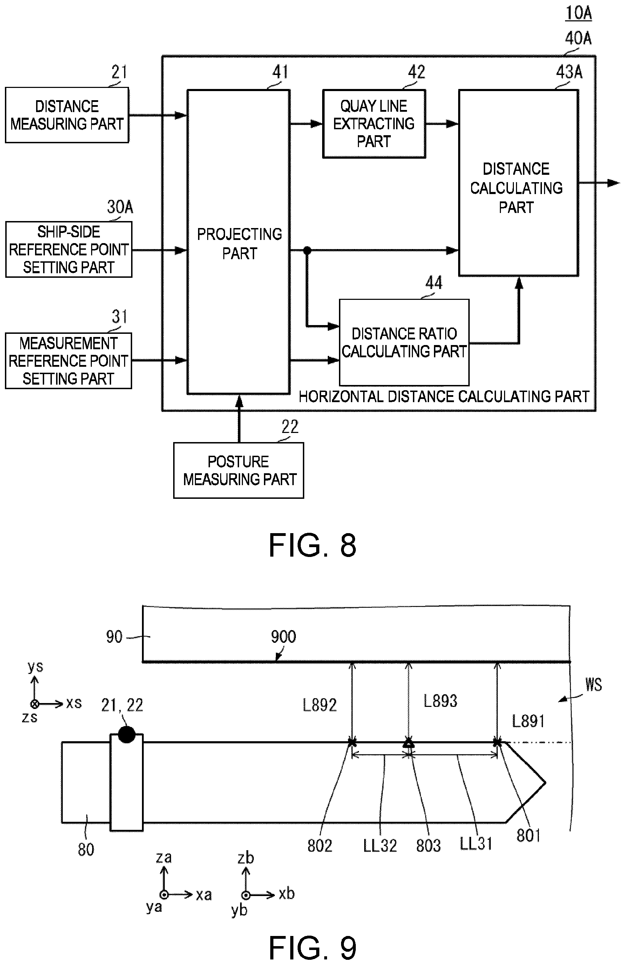

A navigation support technique according a third embodiment of the present disclosure is described with reference to the drawings. Fig. 8 is a functional block diagram illustrating a configuration of a navigation support device according to the third embodiment of the present disclosure. Fig. 9 is a plan view illustrating a spatial relationship between the ship, the distance measuring part, the quay, and the ship-side reference point.

As illustrated in Figs. 8 and 9, a navigation support device 10A according to the third embodiment differs from the navigation support device according to the second embodiment in that a plurality of ship-side reference points are set, and a measurement reference point is set, and also differs in the configuration and the processing of a horizontal distance calculating part 40A. Other configurations and processings of the navigation support device 10A according to the third embodiment are similar to those of the navigation support device according to the second embodiment, and therefore, explanation of similar parts is omitted.

The navigation support device 10A includes the distance measuring part 21, the posture measuring part 22, a ship-side reference point setting part 30A, a measurement reference point setting part 31, and the horizontal distance calculating part 40A. The horizontal distance calculating part 40A includes the projecting part 41, the quay line extracting part 42, a distance calculating part 43A, and a distance ratio calculating part 44.

As illustrated in Fig. 9, for example, the ship-side reference point setting part 30A sets a ship-side reference point 801 and a ship-side reference point 802 along the port side of the ship 80. Note that the number of ship-side reference points which are set may be three or more.

The measurement reference point setting part 31 receives an operation input from a user etc., and sets an arbitrary position along the port side of the ship 80 as a measurement reference point 803. In other words, the measurement reference point setting part 31 sets an arbitrary point (position) on a straight line which connects the ship-side reference point 801 with the ship-side reference point 802 as the measurement reference point 803.

Note that, in Fig. 9, the measurement reference point 803 is set between the ship-side reference point 801 and the ship-side reference point 802. However, the measurement reference point 803 may be set at a position not between the ship-side reference point 801 and the ship-side reference point 802.

The projecting part 41 projects the position coordinates of the characteristic point of the quay 90 which is the ranging information, position coordinates of the ship-side reference point 801, position coordinates of the ship-side reference point 802, and position coordinates of the measurement reference point 803 to the horizontal plane.

That is, the projecting part 41 calculates position coordinates of each characteristic point projected to the horizontal plane defined by the absolute coordinate system (projected position coordinates of each characteristic point), which are position coordinates of the ship-side reference points 801 and 802 (projected position coordinates of the ship-side reference points 801 and 802), and position coordinates of the measurement reference point 803 (projected position coordinates of the measurement reference point 803). The projecting part 41 outputs the position coordinates of the ship-side reference points 801 and 802 (the projected position coordinates of the ship-side reference points 801 and 802), and the position coordinates of the measurement reference point 803 (the projected position coordinates of the measurement reference point 803) to the distance ratio calculating part 44.

The distance ratio calculating part 44 calculates a horizontal distance LL31 between the ship-side reference point 801 and the measurement reference point 803 in the horizontal plane, and a horizontal distance LL32 between the ship-side reference point 802 and the measurement reference point 803. The distance ratio calculating part 44 calculates a distance ratio of the horizontal distance LL31 and the horizontal distance LL32. The distance ratio calculating part 44 outputs the distance ratio to the distance calculating part 43A.

The distance calculating part 43A calculates, by using a similar method to the distance calculating part 43, a horizontal distance L891 of the ship-side reference point 801, and a horizontal distance L892 of the ship-side reference point 802. The distance calculating part 43A calculates a horizontal distance L893 at the position of the measurement reference point 803 based on the horizontal distance L891, the horizontal distance L892, and the distance ratio of the horizontal distance LL31 and the horizontal distance LL32.

By using such a configuration and processing, the navigation support device 10A can calculate the horizontal distance to the quay line 900 from the arbitrary position of the ship 80. Further, since the horizontal distances at the plurality of ship-side reference points 801 and 802 are used for the calculation of the horizontal distance, the navigation support device 10A can suppress the influence of shaking, and can measure the horizontal distance between the ship 80 and the quay line 900 at the arbitrary position with more sufficient accuracy.

### (Navigation Support Method (Horizontal Distance Calculation Method))

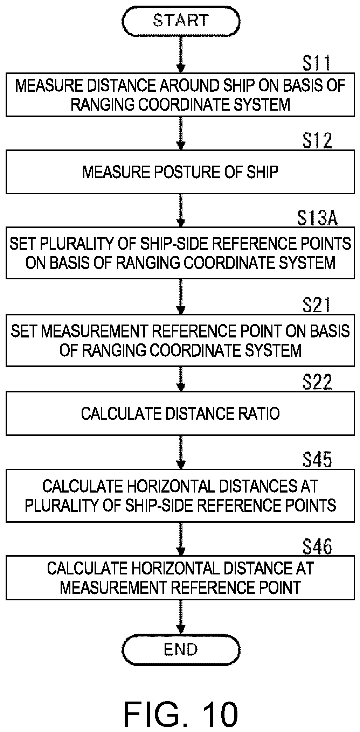

Fig. 10 is a flowchart illustrating one example of a navigation support method according to the third embodiment of the present disclosure. Note that, since the details of each processing illustrated in Fig. 10 are explained as the navigation support device 10A described above, explanation is omitted below unless there is necessity for additional explanation. Further, below, explanation of similar parts to the flowchart illustrated in Figs. 5 and 6 is omitted.

The ship-side reference point setting part 30A sets the plurality of ship-side reference points on the basis of the ranging coordinate system (S 13A). The measurement reference point setting part 31 sets the measurement reference point on the basis of the ranging coordinate system (S21).

The distance ratio calculating part 44 calculates the distance ratio of each ship-side reference point and the measurement reference point (S22).

The distance calculating part 43A calculates the horizontal distances at the plurality of ship-side reference points (S45). The distance calculating part 43A calculates the horizontal distance at the measurement reference point based on the horizontal distances of the plurality of ship-side reference points and the distance ratios (S46).

By this processing, the horizontal distance between the ship 80 and the quay line 900 at the arbitrary position can be measured with more sufficient accuracy, while suppressing the influence of shaking.

### [Fourth Embodiment]

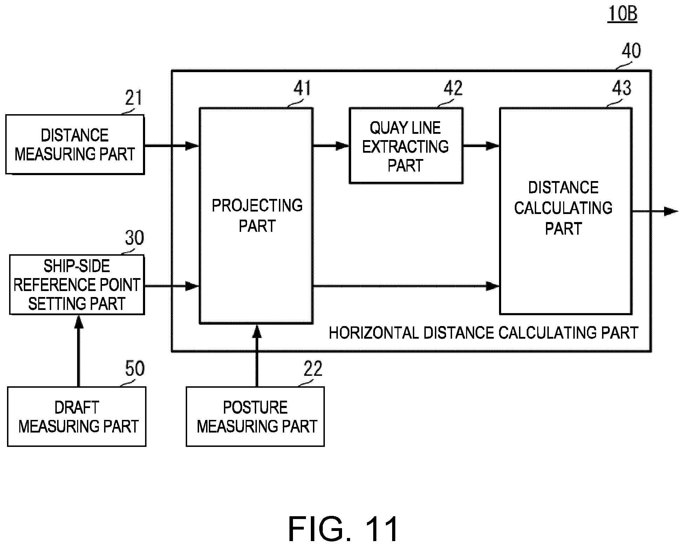

A navigation support technique according to a fourth embodiment of the present disclosure is described with reference to the drawings. Fig. 11 is a functional block diagram illustrating a configuration of a navigation support device according to the fourth embodiment of the present disclosure.

As illustrated in Fig. 11, a navigation support device 10B according to the fourth embodiment differs from the navigation support device 10 according to the first embodiment in that it is provided with a draft measuring part 50.

The navigation support device 10B is provided with the draft measuring part 50. The draft measuring part 50 is installed in the ship 80 to measure the draft at the installed position of the ship-side reference point in the bow-and-stem direction of the ship 80. As the measuring method of the draft, a known method is used. The draft measuring part 50 measures the draft of the ship 80, and outputs it to the ship-side reference point setting part 30.

The ship-side reference point setting part 30 sets the position of the ship-side reference point in the height direction of the ship 80 according to the draft. For example, in detail, the ship-side reference point is set at a plurality of positions of the ship 80 in the height direction. The ship-side reference point setting part 30 selects a ship-side reference point nearest to the water surface WS according to the draft. The ship-side reference point setting part 30 outputs the position coordinates of the selected ship-side reference point to the projecting part 41.

By such a configuration, the navigation support device 10B can set the suitable ship-side reference point according to the draft. Therefore, the navigation support device 10B can measure the horizontal distance with more sufficient accuracy.

### (Navigation Support Method (Horizontal Distance Calculation Method))

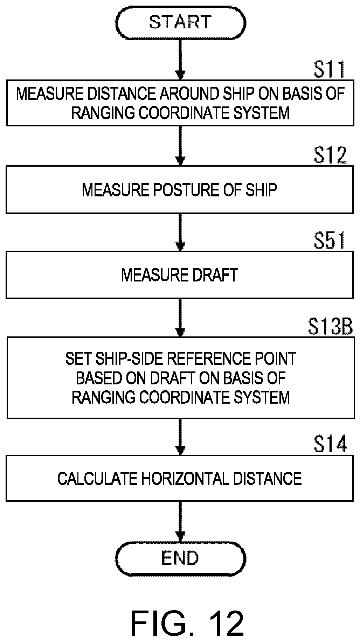

Fig. 12 is a flowchart illustrating one example of a navigation support method according to the fourth embodiment of the present disclosure. Note that, since the details of each processing illustrated in Fig. 12 are explained as the navigation support device 10 described above, explanation is omitted below unless there is necessity for additional explanation. Further, below, explanation of similar parts to the flowchart illustrated in Fig. 5 is omitted.

The draft measuring part 50 measures the draft of the ship 80 (S51). The ship-side reference point setting part 30 sets the ship-side reference point on the basis of the ranging coordinate system based on the draft (S13B).

By this processing, the horizontal distance between the ship 80 and the quay line 900 can be measured with more sufficient accuracy corresponding to the draft, while suppressing the influence of shaking.

Note that the above embodiments may be combined suitably, and operation and effects according to the combination may be obtained.

Further, in the above embodiment, the ship 80 docks at the quay 90 on the port side. However, the configuration and processing described above are also applicable when docking the ship 80 at the quay 90 on the starboard side. In this case, the distance measuring part 21 is installed on the starboard side of the ship 80.

Further, in the above explanation, a quay is a target. However, the configuration and processing described above are applicable, as long as it is an object at which the ship docks or anchors, such as a pier and another ship.

Further, in the above explanation, the straight line (line segment) is used as the characteristic information. However, a point, a surface, and a curve may also be used as the characteristic information, and the configuration and processing described above may also be applicable to these cases.

### DESCRIPTION OF REFERENCE CHARACTERS

10, 10A, 10B: Navigation Support Device
21: Distance Measuring Part
22: Posture Measuring Part
30, 30A: Ship-side Reference Point Setting Part
31: Measurement Reference Point Setting Part
40, 40A: Horizontal Distance Calculating Part
41: Projecting Part
42: Quay Line Extracting Part
43, 43A: Distance Calculating Part
44: Distance Ratio Calculating Part
50: Draft Measuring Part
80: Ship
90: Quay
800, 801, 802: Ship-side Reference Point
803: Measurement Reference Point
900: Quay Line
901: Quay Reference Point

## Claims

1. A navigation support device, comprising:
a distance measuring part configured to measure a distance of a quay that is a target at which a ship docks, on the basis of a ranging coordinate system, and output ranging information on the quay on the basis of the ranging coordinate system;
a posture measuring part configured to measure a posture of the ship;
a ship-side reference point setting part configured to set a given position of the ship as a ship-side reference point on the basis of the ranging coordinate system; and
a horizontal distance calculating part configured to calculate a horizontal distance between the ship and the quay based on the ranging information on the quay and the ship-side reference point that are projected to a horizontal plane, by using the posture.

2. The navigation support device of claim 1, wherein the horizontal distance calculating part includes:
a projecting part configured to project the ranging information on the quay and the ship-side reference point to the horizontal plane by using the posture;
a quay line extracting part configured to extract a quay line for calculation of the horizontal distance based on the ranging information on the quay projected to the horizontal plane; and
a distance calculating part configured to calculate the horizontal distance based on the quay line and the ship-side reference point.

3. The navigation support device of claim 1 or 2, wherein the posture includes a rolling component.

4. The navigation support device of any one of claims 1 to 3, wherein the posture includes a yawing component.

5. The navigation support device of any one of claims 1 to 4, wherein the ship-side reference point setting part sets a plurality of the ship-side reference points, and
wherein the horizontal distance calculating part calculates the horizontal distance at an arbitrary measurement reference point on a straight line passing through the plurality of ship-side reference points based on the horizontal distances of the plurality of ship-side reference points.

6. The navigation support device of any one of claims 1 to 5, comprising a draft measuring part configured to measure a draft of the ship,
wherein the ship-side reference point setting part sets a position of the ship-side reference point in a height direction of the ship based on the draft.

7. A navigation support method, comprising the steps of:
measuring a distance of a quay that is a target at which a ship docks, on the basis of a ranging coordinate system, and outputting ranging information on the quay on the basis of the ranging coordinate system;
measuring a posture of the ship;
setting a given position of the ship as a ship-side reference point on the basis of the ranging coordinate system; and
calculating a horizontal distance between the ship and the quay based on the ranging information on the quay and the ship-side reference point that are projected to a horizontal plane, by using the posture.

8. A navigation support program configured to cause a computer to execute processing, the processing comprising:
measuring a distance of a quay that is a target at which a ship docks, on the basis of a ranging coordinate system, and outputting ranging information on the quay on the basis of the ranging coordinate system;
measuring a posture of the ship;
setting a given position of the ship as a ship-side reference point on the basis of the ranging coordinate system; and
calculating a horizontal distance between the ship and the quay based on the ranging information on the quay and the ship-side reference point that are projected to a horizontal plane, by using the posture.
